# EUROPÄISCHE PATENTSCHRIFT

(11) **EP 0 449 152 B1**
(45) Veröffentlichungstag und Bekanntmachung des Hinweises auf die Patenterteilung: **15.02.1995**
(21) Anmeldenummer: 91104601.9
(22) Anmeldetag: 24.03.1991
(51) Int. Cl.: A61C 15/04

(54) **Gerät zum Reinigen von Zähnen und/oder Zahnzwischenräumen**
Device for cleaning teeth and/or interdental spacings
Dispositif pour nettoyer les dents et/ou les interstices dentaires

(30) Priorität: 26.03.1990 DE 9003517 U
(43) Veröffentlichungstag der Anmeldung: 02.10.1991
(73) Patentinhaber: Eisen, Ewald, D-91719 Heidenheim (DE)
(72) Erfinder: Eisen, Ewald, D-91719 Heidenheim (DE)
(74) Vertreter: Hafner, Dieter, Dr.rer.nat., Dipl.-Phys.

(56) Entgegenhaltungen:
- WO-A-85/02533
- DE-C- 85 013
- DE-U- 9 003 517
- US-A- 3 847 168
- US-A- 3 927 686
- US-A- 4 005 721
- US-A- 4 817 642
- US-A- 4 817 642
- US-A- 4 920 992

## Beschreibung

Die Erfindung betrifft ein Gerät zum Reinigen von Zähnen oder Zahnzwischenräumen gemäß dem Oberbegriff des Patentanspruchs 1.

Ein entsprechendes Gerät ist bereits in US-A-4 817 642 beschrieben. Dieses bekannte Gerät weist einen bügelförmlgen Zahnseidehalter auf, welcher im Seitenbereich eines der beiden Bügel eine vorsprungartige Anformung zur Herstellung einer schwenkbaren Verbindung mit dem Endbereich des zugehörigen Stiels besitzt. An der Ober- sowie Unterseite der Anformung befinden sich zwei zylindrische Vorsprünge, die im montierten Zustand in einer senkrecht verlaufenden Bohrung im Endbereich des Stiels angeordnet sind und die Verschwenkachse für den Zahnseidenhalter bilden. Der Zahnseidenhalter wird mit seiner Anformung an der vorderseitigen Stirnseite des Stiels eingeschoben, wobei die Flächen (camming surfaces) auseinandergedrückt werden und anschließend - sobald sich die Vorsprünge in der Bohrung befinden - für eine verrastende Verbindung sorgen.

Aus US-A-3 927 686 sowie WO-A-8 502 533 ist jeweils ein Reinigungsgerät mit einem am Stiel mittig angeordneten bügelförmigen, verschwenkbaren Zahnseidenhalter bekannt.

Schließlich zeigt die US-A-3 847 168 ein Zahnreinigungsgerät, welches sowohl als Zahnbürste als auch als Zahnseidenhalter einsetzbar ist. Hierzu sind zwei verschiedene Einsätze an der Vorderseite des Haltegriffs bzw. Stiels vorgesehen. Der Zahnseidenhalter ist als Gabel ausgebildet, die von einer Rolle im Inneren des Handgriffs nachführbare Zahnseide aufspannt. Der Zahnseidenhalter ist fest zum Stiel angeordnet.

Die Aufgabe der vorliegenden Erfindung besteht darin, das gattungsgemäße Gerät derart weiterzubilden, daß bei vereinfachter Konstruktion und Austauschbarkeit des Zahnseidenhalters eine sehr gute Zugänglichkeit sowie vereinfachte Handhabung bei der Reinigung vor allem auch des Backenzahnbereichs ermöglicht wird.

Die vorstehende Aufgabe wird bei dem gattungsgemäßen Gerät dadurch gelöst, daß der Bügel mit einem einer seiner Schenkel als Achse am Griff schwenkbar gehaltert ist. Vorteilhafte Ausgestaltungen der Erfindung ergeben sich aus den Unteransprüchen.

Ferner ist es von Vorteil, wenn ein erster Abschnitt des Griffs zu einer verbreiterten Handhabe ausgebildet ist, an die sich ein zweiter Abschnitt in Form eines verjüngten Stiels anschließt, an dessen freiem Ende der Zahnseidenhalter angeordnet ist. Hierdurch wird die Handhabung des Gerätes erleichtert, denn es läßt sich an der Handhabe im Gegensatz zu einem dünnen Stiel gut festhalten, während nur der verjüngte Stiel mit dem Zahnseidenhalter in den Mund eingeführt wird.

Eine weitere zweckmäßige Ausgestaltung der vorliegenden Erfindung liegt darin, daß die verbreiterte Handhabe eine vorgegebene Vorzugserstreckung aufweist und die Schwenkachse zur Verschwenkung des Funktionsteils bzw. Zahnseidenhalters entsprechend dieser Längserstreckung verläuft.

Gemäß einer bevorzugten Ausführungsart sind der erste Abschnitt des Griffes und dessen zweiter Abschnitt lösbar zusammengesteckt. Dies hat den Vorteil, daß die beiden Abschnitte des Griffes z. B. bei Beschädigung von einem der Abschnitte unabhängig voneinander ersetzt werden können.

Vorzugsweise ist der erste Abschnitt des Griffs im Inneren als Hohlraum ausgebildet, in welchem z. B. Ersatzbügel untergebracht werden können.

Zum Verschließen des Hohlraums ist es günstig, wenn der zweite Abschnitts des Griffs den Hohlraum des ersten Abschnitts des Griffs in zusammengestecktem Zustand verschließt.

Vorteilhafterweise ist der Hohlraum in dem ersten Abschnitts des Griffs mindestens so lang wie der zweite Abschnitts des Griffs einschließlich des Bügels, so daß nach Lösen der Abschnitte der zweite Abschnitt im Hohlraum des ersten Abschnittes unterbringbar ist. Nach Benutzen des Gerätes kann somit der Stiel des Griffes in dem ersten Abschnitt des Griffs eingeschoben aufbewahrt werden.

Gemäß einer bevorzugten Ausführungsart ist der eine Schenkel des Bügels länger als der andere Schenkel des Bügels. Hierbei kann das freie Ende des längeren Schenkels zur Befestigung des Zahnseidenhalters verwendet werden und der Zahnseidenfaden so befestigt werden, daß das freie Ende des kürzeren Schenkels nur wenig über dem Zahnseidenfaden hinausragt.

Vorzugweise ist zur Befestigung des längeren Schenkels an dem Stiel an dem der Handhabe angewandten Endes des Stieles eine erste Bohrung ausgebildet, in die ein Endabschnitt des längeren Schenkels des Bügels eingesteckt ist. Der Bügel kann auf diese Art an dem Stiel ohne große Kraftanstrengung leicht angebracht und wieder entfernt werden.

Gemäß einer bevorzugten Ausführungsart ist der Endabschnitt des längeren Schenkels des Bügels geschlitzt, wobei an dem freien Endes des Endabschnitts etliche Vorsprünge ausgebildet sind, die aus der ersten Bohrung herausragen und den Rand untergreifen. Bei dieser Ausführungsart läßt sich der Endabschnitt des längeren Schenkels elastisch so zusammendrücken, daß dieser Schenkel ohne Mühe durch die erste Bohrung im Stiel hindurchgeführt werden kann und daß sich das Ende des Schenkels nach Loslassen wieder elastisch auseinanderspreizt, so daß der Schenkel in der Bohrung festsitzt. Die den Rand untergreifenden Vorsprünge verhindern, daß der Bügel beim Reinigen der Zähne aufgrund der dabei auf den Bügel wirkenden Kräfte aus der Bohrung herausgedrückt wird.

Wenn der geschlitzte Endabschnitt im entspannten Zustand einen größeren Durchmesser als die Bohrung aufweist, läßt sich der Bügel in der Bohrung einklemmen.

Schließt sich ferner an die erste Bohrung an dem der Handhabe abgewandten Ende des Stieles eine größere zweite Bohrung an, in welcher die Vorsprünge des längeren Endabschnittes des Bügels liegen, so wird das Herausdrücken des Bügels aus der Bohrung vermieden, ohne daß dabei die Vorsprünge störend über die Rückseite des Stieles ragen.

Ist außerdem an dem Endabschnitt des längeren Schenkels des Bügels eine Ringspule mit Abstand zum freien Ende des Schenkels ausgebildet, so bildet die Ringschulter einen Anschlag, der ein Verrutschen des Bügels verhindert.

Gemäß einem anderen bevorzugten Ausführungsbeispiel ist die erste Bohrung zum freien Ende des Stieles hin offen, die zweite größere Bohrung schräg ausgebildet, und zwischen den Bohrungen ist ein zur ersten Bohrung vertikaler Schlitz mit der Dicke der Ringschulter ausgebildet. Hierbei wir der Bügel dadurch an dem Stiel befestigt, daß das freie Ende des Schenkels in die zweite schräge Bohrung eingeführt wird, und die Ringschulter in den Schlitz zwischen den Bohrungen gelegt wird. Der Bügel ist dann gegen Verrutschen gesichert, kann aber durch Verkippen leicht wieder entfernt werden.

Bei einer weiteren Ausgestaltung des erfindungsgemäßen Geräts ist die Verschwenkung des Zahnseidenhalters bzw. des Zahnbürstenhalters zum Griff arretierbar. Die Verschwenkbarkeit wird hierdurch nicht beeinträchtigt, es werden lediglich gewisse bevorzugte Verschwenkstellungen erzeugt, welche entweder vor dem Reinigen oder aber während des Reinigens eingestellt bzw. verändert werden können. Beispielsweise kann die Reinigung der Innenseite eines Backenzahnzwischenbereichs bei fest arritierter Verschwenkung z. B. des Zahnseidenhalters zum Griff erfolgen.

Diese Arretierwirkung wird zweckmäßigerweise dadurch erzeugt, daß im Verbindungsbereich, d. h. im Bereich der Schwenkachse zwischen Zahnseidenhalter bzw. Zahnbürstenhalter und Griff mindestens eine Nase vorgesehen ist, die federnd in mindestens eine Kerbe eingreift. Diese Ausgestaltung gewährleistet eine gewisse Haltekraft bei Arretierung, wobei die Arretierung bei Überschreiten dieser Halterkraft aufgehoben werden kann. Diese Haltekraft ist zweckmäßigerweise so auszulegen, daß sie den Anforderungen entsprechend entweder während des Reinigungsvorgangs oder aber lediglich vor dem Reinigungvorgang überschritten werden kann, d. h. die entsprechende Arretierung einstellbar ist.

In diesem Zusammenhang können zweckmäßigerweise an der dem Handgriff zugewandten Seite der Ringschulter eine Vielzahl von Nasen angeordnet sein, welche in entsprechende Ausnehmungen am vorderen Bereich des Stieles eingreifen.

Dadurch, daß der Endabschnitt des mit dem Griff verbundenen Schenkels an der Unterseite des dem Handgriff abgewandten Ende des Stieles herausragt, wird sichergestellt, daß durch einfaches Eindrücken des herausragenden Endes des Stieles der die Zahnseide haltenden Bügel in einfacher Weise entfernt werden kann.

Im folgenden ist die Erfindung anhand der Zeichnung näher beschreiben. Es zeigen:
- Fig. 1: eine Seitenansicht des erfindungsgemäßen Gerätes gemäß eines ersten Ausführungsbeispiels unter Verwendung eines als Zahnseidenhalter ausgebildeten Funktionsteils;
- Fig. 2: eine Draufsicht auf das Gerät aus Fig. 1 mit einem verschwenkt angeordneten Zahnseidenhalter,
- Fig. 3: eine Draufsicht auf den Zahnseidenhalter aus Fig. 1 und 2,
- Fig. 4: eine Seitenansicht auf das Gerät gemäß eines zweiten Ausführungsbeispiels,
- Fig. 5: eine Seitenansicht auf den Zahnseidenhalter aus Fig. 4,
- Fig. 6: eine Draufsicht auf den Griff aus Fig. 4,
- Fig. 7: eine Seitenansicht des erfindungsgemäßen Gerätes gemäß eines weiteren Ausführungsbeispiels unter Verwendung eines als Folienhalter ausgebildeten Funktionsteils,
- Fig. 8: eine Draufsicht auf die Unterseite des Geräts aus Fig. 7
- Fig. 9: eine Seitenansicht auf den Folienhalter aus Fig. 7,
- Fig. 10: eine Ansicht des Folienhalters entlang der Schnittlinie A-A von Fig. 9,
- Fig. 11: eine Seitenansicht des erfindungsgemäßen Gerätes gemäß eines weiteren Ausführungsbeispiels unter Verwendung eines als Interdentalbürstenhalter ausgebildeten Funktionsteils,
- Fig. 12: eine Draufsicht auf die Unterseite des Geräts aus Fig. 11,
- Fig. 13: eine Seitenansicht des Interdentalbürstenhalters aus Fig. 11 und 12, sowie
- Fig. 14: eine Ansicht des Folienhalters entlang der Schnittlinie B-B von Fig. 13.

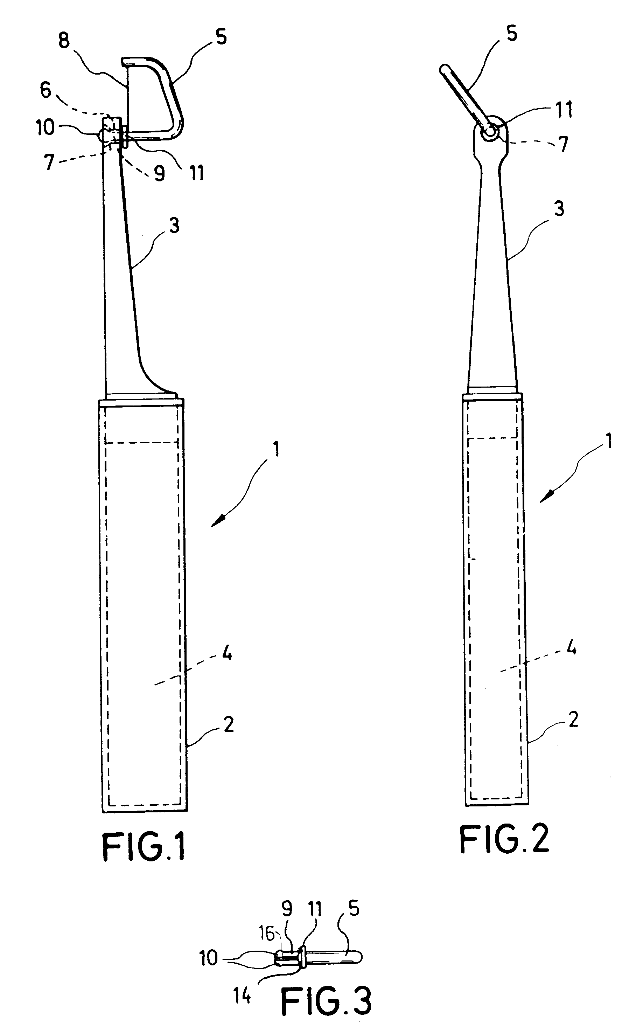

Der Griff 1 des Geräts ist gemäß Fig. 1 und 2 in eine verbreiterte Handhabe 2 und einen verjüngten Stiel 3 unterteilt, die lösbar zusammengesteckt sind. In der Handhabe 2 ist ein Hohlraum 4 ausgebildet, welcher mit dem verbreiterten Ende des Stieles 3 verschlossen ist. Der Hohlraum 2 ist so lang ausgebildet, daß das verjüngte Ende des Stieles 3 in den Hohlraum 4 gesteckt werden kann, der Hohlraum mit dem verbreiterten Ende des Stieles 3 verschlossen wird, und zusätzlich Bügel 5 in dem Hohlraum 4 untergebracht werden können. An dem verjüngten Ende des Stieles 3 ist vertikal zu der Längsachse des Stieles 3 eine erste Bohrung 6 angeordnet, an die sich eine zweite breitere Bohrung 7 anschließt.

In den Bohrungen 6 und 7 wird der Bügel 5 schwenkbar gehaltert. Zwischen den frei endenden Schenkeln des Bügels 5 ist ein Stück fadenförmige Zahnseide 8 gespannt. Der eine Schenkel des Bügels 5 ist länger als der andere, wobei der Endabschnitt 9 des längeren Schenkels des Bügels 5 mit einer Schlitzung 16 versehen ist, etwas dicker als die Bohrung 6 ausgebildet ist, und mit seitlichen Vorsprüngen 10 versehen ist (siehe Fig. 3). An dem Endabschnitt 9 des längeren Schenkels des Bügels 5 ist eine Ringschulter 11 angeordnet, die einen Abstand zum freien Ende des Schenkels bildet. Der mittlere Teil des Bügels 5 ist abgeflacht und zum kürzeren Schenkel des Bügels 5 hin geneigt ausgebildet, wodurch beim Reinigen der Zahnzwischenräume ein Anstoßen des Bügels 5 an das Gebiß verhindert wird. Der geschlitzte Endabschnitt 9 wird durch Zusammendrücken in die Bohrung 6 eingeführt, so daß die Vorsprünge 10 in der Bohrung 7 zu liegen kommen. Läßt man den Bügel 5 los, so dehnt sich das geschlitzte Ende des Endabschnitts 9 elastisch aus, so daß der Bügel 5 in den Bohrungen 6 und 7 fest aber verschwenkbar gehaltert ist, und zwar um eine zur Längserstreckung des Zahnseidenfadens rechtwinkligen Achse.

Das Gerät wird zum Reinigen von Zahnzwischenräumen in dem gerade beschriebenen zusammengesteckten Zustand benutzt. Zum Reinigen der Zwischenräume zwischen den Schneidzähnen wird der Bügel 5 so gedreht, daß der Zahnseidenfaden 8 parallel zur Längsachse des Griffes 1 liegt. Zum Reinigen seitlicher Zahnzwischenräume wird der Bügel 5 so verschwenkt, daß der Zahnseidenfaden 8 mit der Längsachse des Griffes 1 einen geeigneten Winkel bildet; zum Reinigen der Zwischenräume zwischen den hinteren Backenzähnen ist der Winkel zwischen Zahnseidenfaden 8 und Längsachse des Griffes 1 vorzugsweise rechtwinklig. Ist der Reinigungsvorgang beendet, kann der Bügel 4 durch Zusammenrücken des Endes 9 des längeren Schenkels des Bügels 5 aus den Bohrungen 6 und 7 entfernt und gegebenenfalls durch einen neuen, unbenutzten Bügel ausgetauscht werden. Der Stiel 3 kann zur Öffnung des Hohlraumes von der Handhabe 2 getrennt werden, wonach der oder die Bügel im Hohlraum 4 der Handhabe 2 verstaut werden können. Die Handhabe 2 und der Stiel 3 können so zusammengesteckt werden, daß das verjüngte Ende des Stieles 3 in dem Hohlraum 4 untergebracht ist.

Zur Gewährleistung einer Arretierung bzw. Rastwirkung der Verschwenkposition von Bügel 5 zu Griff 3 sind an der Unterseite der Ringschulter 11 Nasen 14 vorgesehen, welche in entsprechende (nicht dargestellte) Ausnehmungen oder Kerben am Endbereich des Griffs 3 federnd eingreifen und jeweilige Arretierpositionen gewährleisten.

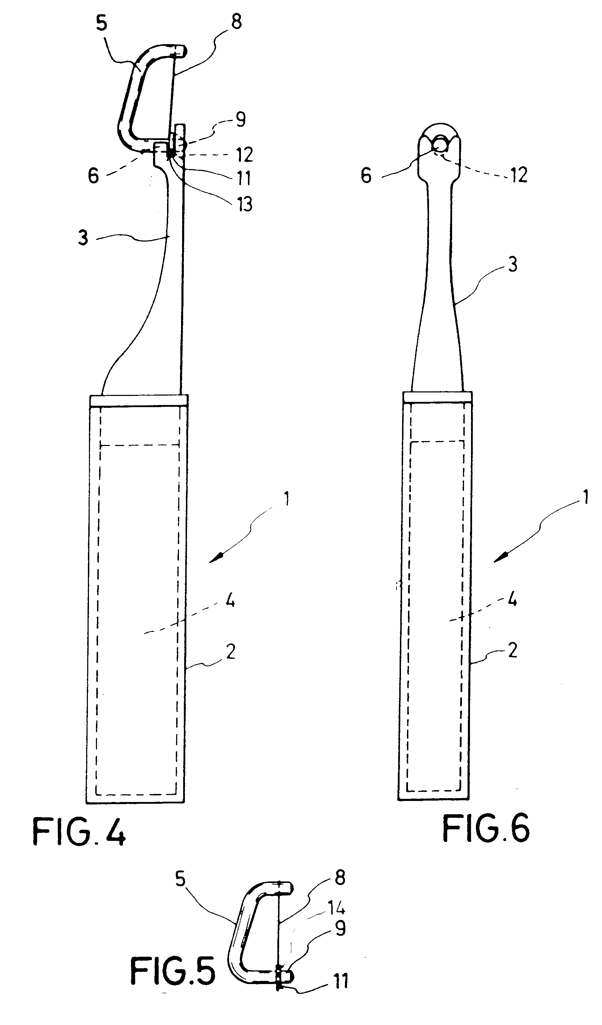

Anhand der Fig. 4 - 5 wird ein weiteres Ausführungsbeispiel beschrieben, das dem oben beschriebenen sehr ähnlich ist. Deshalb werden für gleiche und ähnliche Bauteile identische Bezugszeichen verwendet und nur die Unterschiede näher erläutert. Bei diesem Ausführungsbeispiel ist die erste Bohrung 6 am Stiel 3 zum freien Ende des Stieles hin offen. Die zweite größere Bohrung 12 ist schräg ausgebildet und zwischen den Bohrungen 6, 12 ist ein zur ersten Bohrung 6 vertikaler Schlitz 13 ausgebildet, der so breit ist wie die Dicke der Ringschulter 11. Das Ende des Schenkels des Bügels 5, an dem die Ringschulter 11 befestigt ist, wird zunächst schräg in die Bohrung 12 eingeführt und dann in die Vertikale geschwenkt, so daß der Schenkel des Bügels 5 auch in die offene Bohrung 6 und die Ringschulter 11 in dem Schlitz eingreift. Zum Auswechseln des Bügels 5 muß dieser dann zunächst in die Schräglage gekippt werden, damit die Ringschulter 11 aus dem Schlitz 13 herauskommt. Dann kann der Bügel in Richtung der schrägen Bohrung 12 herausgezogen werden und gegen einen neuen Bügel ausgetauscht werden. Im übrigen läßt sich der Bügel 5 ebenso wie in dem oben beschriebenen ersten Ausführungsbeispiel um die Achse der Bohrung 6 des Griffes 1 verschwenken. Die Anwendung des Gerätes erfolgt wie beim ersten Ausführungsbeispiel.

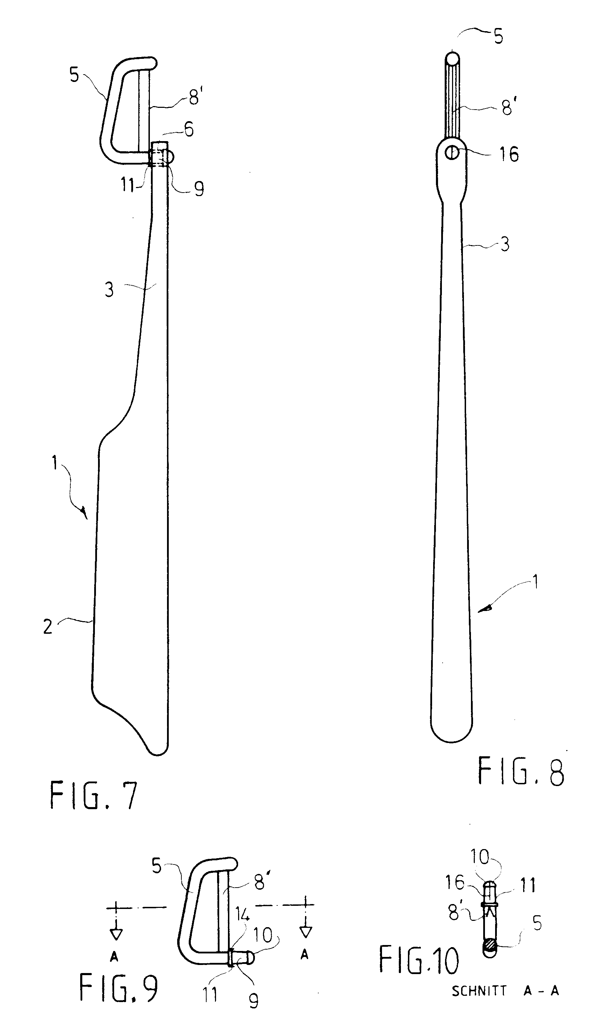

Anhand der Figuren 7 bis 14 werden weitere, zweckmäßige Ausführungsbeispiele beschrieben, die von der Idee der Erfindung Gebrauch machen. Für gleiche und ähnliche Bauteile werden auch hier identische Bezugszeichen verwendet. Nachstehend werden lediglich die Unterschiede zu den Ausgestaltungen gemäß der Figuren 1 - 6 näher erläutert.

Die Figuren 7 - 10 zeigen ein weiteres Ausführungsbeispiel der Erfindung, bei dem anstelle der Zahnseide eine vorzugweise gefaltete Folie 8' zwischen den beiden Bügeln des Halters 5 gespannt ist. Wie aus Fig. 10 ersichtlich ist, ist die Kante der gefalteten Folie 8' zur offenen Seite des Bügels 5 hin gerichtet. Die Enden der gefalteten Folie 18' sind in geeigneter (nicht dargestellter) Weise fest mit den Armen des Bügels 5 verbunden. Im Gegensatz zu den Ausgestaltungen gemäß den Figuren 1 - 6 weist die Ausführungsform gemäß der Figuren 7 - 10 einen einstückigen Griff 1 auf, bei dem die flach ausgebildete und hinsichtlich ihrer flachen Erstreckung mit der vom Bügel 5 aufgespannten Ebene (bei nicht verschwenktem Bügel) fluchtende Handhabe 2 einstückig in den Stiel 3 übergeht. Der Endabschnitt 9 des längeren Schenkels des Bügels 5 ist ebenfalls mit einer Schlitzung 16 versehen. Der Endabschnitt 9 des Bügels 5 wird zur Befestigung mit dem Stiel 3 in eine im Stiel angeordnete Bohrung 6 eingeschoben, wodurch aufgrund der Vorsprünge 10 die Schlitzung 16 zusammengedrückt wird und der Endabschnitt in die Bohrung 6 einrastet, sobald die Vorsprünge 10 des Endabschnitts 9 durch die Bohrung hindurchgeschoben worden sind. Auch hierdurch wird eine Verschwenkbarkeit des Zahnseidenhalters zum Griff 1 gewährleistet.

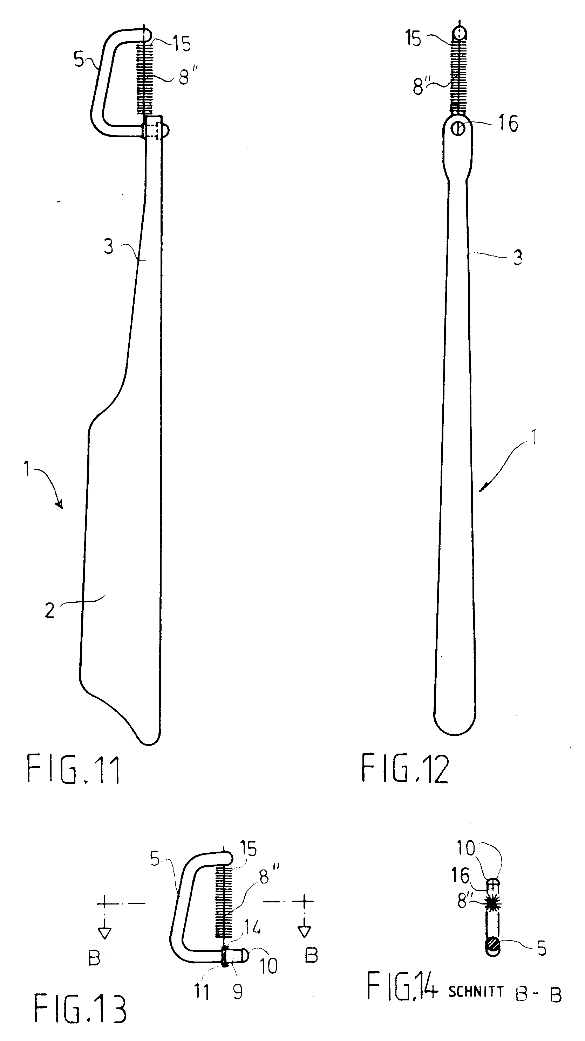

Bei einem weiteren in den Figuren 11 - 14 dargestellten Ausführungsbeispiel des Gerätes ist zwischen den freiendenden Schenkeln des Bügels 5 anstelle der fadenförmigen Zahnseide 8 bzw. der gefalteten Folie 8' eine Interdentalbürste 8'' eingespannt. Die Bürste kann einen Draht oder Faden umfassen, der wie der Zahnseidenfaden 8 an dem Bügel angeordnet ist. Die Borsten 15 sind um den Draht oder Faden herum spiralförmig angeordnet. Mit dieser Bürste kann das Gerät auch zum Reinigen großer Zahnzwischenräume, z. B. aufgrund von Zahnlücken verwendet werden. Ansonsten entspricht die Ausgestaltung derjenigen der Fig. 7 - 10.

### BEZUGSZEICHENLISTE

- 1: Griff
- 2: Handhabe
- 3: Stiel
- 4: Hohlraum
- 5: Bügel
- 6: Bohrung
- 7: Bohrung
- 8: Zahnseide
- 8': Folie
- 8'': Bürstenkörper
- 9: Endabschnitt
- 10: Vorsprung
- 11: Ringschulter
- 12: schräge Bohrung
- 13: Schlitz
- 14: Nase
- 15: Borste
- 16: Schlitzung

## Patentansprüche

1. Gerät zum Reinigen von Zähnen oder Zahnzwischenräumen mit einem Griff (1) zum Anfassen des Geräts sowie einem am Ende des Griffs (1) angeordneten, auswechselbaren Halter in Form eines Bügels (5), zwischen dessen beiden Schenkel ein Stück faden- oder bandförmiges Reinigungsmedium, insbesondere Zahnseide vorzugsweise gespannt angeordnet ist, wobei der Bügel in einer zur Längserstreckung des Zahnseidenfadens (8) im wesentlichen rechtwinkligen Achse schwenkbar mit dem Griff (1) verbunden ist,
**dadurch gekennzeichnet,**
daß der Bügel (5) mit einem seiner Schenkel als Achse am Griff (1) schwenkbar gehaltert ist.

2. Gerät nach Anspruch 1,
**dadurch gekennzeichnet,**
daß ein erster Abschnitt des Griffs (1) zu einer verbreiterten Handhabe (2) ausgebildet ist, an die sich ein zweiter Abschnitt in Form eines verjüngten Stiels (3) anschließt, an dessen freiem Ende der Zahnseidenhalter bzw. der Zahnbürstenhalter angeordnet ist.

3. Gerät nach Anspruch 2,
**dadurch gekennzeichnet,**
daß der erste Abschnitt des Griffs (1) und dessen zweiter Abschnitt lösbar zusammengesteckt sind.

4. Gerät nach der Ansprüche 2 oder 3,
**dadurch gekennzeichnet,**
daß der erste Abschnitt des Griffs (1) im Inneren als Hohlraum (4) ausgebildet ist.

5. Gerät nach Anspruch 4,
**dadurch gekennzeichnet,**
daß der zweite Abschnitt des Griffs (1) den Hohlraum (4) des ersten Abschnitts des Griffs (1) im zusammengesteckten Zustand verschließt.

6. Gerät nach einem der Ansprüche 3 - 5,
**dadurch gekennzeichnet,**
daß der Hohlraum (4) in dem ersten Abschnitt des Griffs (1) mindestens so lang ist, wie der zweite Abschnitt des Griffs (1) einschließlich des Bügels (5), so daß nach Lösen der Abschnitte der zweite Abschnitt im Hohlraum (4) des ersten Abschnitts unterbringbar ist.

7. Gerät nach einem der Ansprüche 1 - 6,
**dadurch gekennzeichnet,**
daß der eine Schenkel des Bügels (5) länger als der andere Schenkel des Bügels (5) ist.

8. Gerät nach Anspruch 7,
**dadurch gekennzeichnet,**
daß an dem der Handhabe (2) abgewandten Ende des Stiels (3) eine erste Bohrung (6) ausgebildet ist, in die ein Endabschnitt des längeren Schenkels des Bügels (5) eingesteckt ist.

9. Gerät nach Anspruch 8,
**dadurch gekennzeichnet,**
daß der Endabschnitt (9) des längeren Schenkels des Bügels (5) geschlitzt ist, wobei an dem freien Ende des Endabschnitts seitliche Vorsprünge (10) ausgebildet sind, die aus der ersten Bohrung (6) herausragen und den Rand untergreifen.

10. Gerät nach Anspruch 9,
**dadurch gekennzeichnet,**
daß der geschlitzte Endabschnitt (9) einen geringfügig größeren Durchmesser als die erste Bohrung (6) aufweist.

11. Gerät nach Anspruch 9 oder 10,
**dadurch gekennzeichnet,**
daß sich an die erste Bohrung (6) an dem der Handhabe (3) abgewandten Ende des Stiels (3) eine größere zweite Bohrung (7) anschließt, in welcher die Vorsprünge (10) des längeren Endabschnittes des Bügels (5) liegen.

12. Gerät nach einem der Ansprüche 7 - 11,
**dadurch gekennzeichnet,**
daß an dem Endabschnitt (9) des längeren Schenkels des Bügels (5) eine Ringschulter (11) mit Abstand zum freien Ende des Schenkels ausgebildet ist.

13. Gerät nach Anspruch 12,
**dadurch gekennzeichnet,**
daß die erste Bohrung (6) zum freien Ende des Stiels (3) hin offen ist, die zweite größere Bohrung (12) schräg ausgebildet ist, und zwischen den Bohrungen (6, 12) ein zur ersten Bohrung (6) vertikaler Schlitz (13) mit der Dicke der Ringschulter (11) ausgebildet ist.

14. Gerät nach einem der Ansprüche 1 - 13,
**dadurch gekennzeichnet,**
daß die Verschwenkung des Zahnseidenhalters bzw. des Zahnbürstenhalters zum Griff (1) arretierbar ist.

15. Gerät nach Anspruch 14,
**dadurch gekennzeichnet,**
daß zur Erzeugung der Arretierung im Verbindungsbereich zwischen Zahnseidenhalter bzw. Zahnbürstenhalter und Griff (1) mindestens eine Nase vorgesehen ist, die federnd in mindestens eine Kerbe eingreift.

16. Gerät nach einem der Ansprüche 1 - 15,
**dadurch gekennzeichnet,**
daß der Endabschnitt (9) des mit dem Griff (1) verbundenen Schenkels an der Unterseite des dem Handgriff abgewandten Ende des Stiels (3) herausragt.

## Claims

1. Device for cleaning teeth or interdental spacings, comprising a handle (1) for holding the device and an exchangeable holder which is disposed at one end of the handle (1) and is in the form of a bow (5), between the two legs of which a piece of thread or strip-type cleaning material, in particular dental floss, is disposed, preferably under tension, the bow being connected pivotably to the handle (1) in an axis which is substantially at right angles with respect to the longitudinal extension of the dental floss thread (8), characterised in that the bow (5) is pivotably mounted on the handle (1) with its leg as the axis.

2. Device according to Claim 1, characterised in that a first section of the handle (1) is formed as a widened hand hold (2), to which there is connected a second section, in the form of a tapering shank (3), on the free end of which the dental floss holder or the toothbrush holder is disposed.

3. Device according to Claim 2, characterised in that the first section of the handle (1) and the second section thereof are assembled in a detachable manner.

4. Device according to Claim 2 or 3, characterised in that the first section of the handle (1) is formed as a hollow chamber (4) in the interior.

5. Device according to Claim 4, characterised in that the second section of the handle (1) closes the hollow chamber (4) of the first section of the handle (1) in the assembled state.

6. Device according to one of Claims 3 to 5, characterised in that the hollow chamber (4) in the first section of the handle (1) is at least as long as the second section of the handle (1) including the bow (5), such that, when the sections have been separated, the second section can be accommodated in the hollow chamber (4) of the first section.

7. Device according to one of Claims 1 to 6, characterised in that the one leg of the bow (5) is longer than the other leg of the bow (5).

8. Device according to Claim 7, characterised in that on the end of the shank (3) which is remote from the hand hold (2), there is formed a first bore (6), in which an end section of the longer leg of the bow (5) is inserted.

9. Device according to Claim 8, characterised in that the end section (9) of the longer leg of the bow (5) is slotted, wherein, at the free end of the end section, lateral projections (10) are formed, which project out of the first bore (6) and engage below the edge.

10. Device according to Claim 9, characterised in that the slotted end section (9) has a slightly larger diameter than the first bore (6).

11. Device according to Claim 9 or 10, characterised in that a larger second bore (7) is connected to the first bore (6) on the end of the shank (3) which is remote from the hand hold (3), in which second bore the projections (10) of the longer end section of the bow (5) are located.

12. Device according to one of Claims 7 to 11, characterised in that on the end section (9) of the longer leg of the bow (5), an annular shoulder (11) is formed at a distance from the free end of the leg.

13. Device according to Claim 12, characterised in that the first bore (6) is open towards the free end of the shank (3), the second, larger bore (12) is formed in an angled manner, and between the bores (6, 12) there is formed a slot (13) which is vertical to the first bore (6) and has the same thickness as the annular shoulder (11).

14. Device according to any one of Claims 1 to 13, characterised in that the pivoting of the dental floss holder or the dental brush holder on the handle (1) can be stopped.

15. Device according to Claim 14, characterised in that to bring about the stopping in the connection area between the dental floss holder or toothbrush holder and the handle (1), there is provided at least one catch, which engages in a resilient manner in at least one notch.

16. Device according to one of Claims 1 to 15, characterised in that the end section (9) of the leg which is connected to the handle (1) projects out at the lower side of the end of the shank (3) which is remote from the hand hold.

## Revendications

1. Appareil destiné au nettoyage de dents ou d'espaces inter dentaires, comportant un manche (1) pour tenir l'appareil ainsi qu'un support remplaçable placé a l'extrémité du manche (1), ayant la forme d'un étrier (5) entre les deux montants duquel est placé, de préférence tendu, un morceau de matériau nettoyant sous forme de fil ou de ruban, en particulier du fil dentaire de soie, l'étrier étant relié au manche (1) de façon à pouvoir être incliné dans un axe essentiellement à angle droit par rapport à la direction d'extension longitudinale du fil dentaire de soie (8), caractérisé en ce que l'étrier (5) est fixe sur le manche (1) de manière mobile par un de ses montants jouant le rôle d'axe.

2. Appareil selon la revendication 1, caractérisé en ce qu'un premier segment du manche (1) a la forme d'une poignée (2) élargie, à laquelle s'adjoint un deuxième segment sous forme d'une tige (3) effilée, à l'extrémité libre de laquelle on place le support de fil dentaire de soie ou le support de brosse dentaire.

3. Appareil selon la revendication 2, caractérisé en ce que le premier segment du manche (1) et son deuxième segment sont montés l'un dans l'autre de façon à pouvoir être séparés.

4. Appareil selon les revendications 2 ou 3, caractérisé en ce que le premier segment du manche (1) a la forme d'un volume creux (4) à l'intérieur.

5. Appareil selon la revendication 4, caractérisé en ce que le second segment du manche (1), en position montée, ferme le volume creux (4) du premier segment du manche (1).

6. Appareil selon l'une des revendications de 3 à 5, caractérisé en ce que le volume creux (4) dans le premier segment du manche (1) est au moins aussi long que le second segment du manche (1) y compris l'étrier (5), de sorte qu'après désolidarisation des deux segments, le second segment peut être logé dans le volume creux (4) du premier segment.

7. Appareil selon l'une des revendications de 1 à 6, caractérisé en ce que l'un des montants de l'étrier (5) est plus long que l'autre montant de l'étrier (5).

8. Appareil selon la revendication 7, caractérisé en ce que sur l'extrémité de la tige (3) opposée à la poignée (2), est ménagé un premier trou (6) dans lequel est enfoncée une partie terminale du montant le plus long de l'étrier (5).

9. Appareil selon la revendication 8, caractérisé en ce que la partie terminale (9) du montant le plus long de l'étrier (5) est fendue, l'extrémité libre de la partie terminale présentant des saillies latérales (10) qui dépassent du premier trou (6) et s'accrochent au bord.

10. Appareil selon la revendication 9, caractérisé en ce que la partie terminale (9) fendue a un diamètre légèrement supérieur à celui du premier trou (6).

11. Appareil selon la revendication 9 ou 10, caractérisé en ce que, faisant suite au premier trou (6), sur l'extrémité de la tige (3) opposée à la poignée (2), se trouve un second trou (7) plus grand dans lequel se logent les saillies (10) de la partie terminale la plus longue de l'étrier (5).

12. Appareil selon l'une des revendications de 7 à 11, caractérisé en ce que sur la partie terminale (9) du montant plus long de l'étrier (5) est ménagé un anneau à épaulement (11) à une certaine distance de l'extrémité libre du montant.

13. Appareil selon la revendication 12, caractérisé en ce que le premier trou (6) est ouvert en direction de l'extrémité libre de la tige (3), le deuxième trou (12) plus grand est oblique, et entre les trous (6, 12) une encoche (13) verticale par rapport au premier trou (6) est formée avec l'épaisseur de l'anneau à épaulement (11).

14. Appareil selon l'une des revendications 1 à 13, caractérisé en ce que le pivotement du support de fil dentaire de soie ou du support de brosse dentaire par rapport au manche (1) peut être bloqué.

15. Appareil selon la revendication 14, caractérisé en ce que pour la réalisation du blocage, il est prévu, dans la zone de raccord entre le support de fil dentaire de soie ou le support de brosse dentaire et le manche (1), au moins un taquet qui s'enclenche de manière élastique dans au moins une encoche.

16. Appareil selon l'une des revendications 1 à 15, caractérisé en ce que la partie terminale (9) du montant relié au manche (1) fait saillie sur la face inférieure de l'extrémité de la tige (3) opposée à la poignée.
